# EUROPÄISCHE PATENTANMELDUNG

(11) **EP 1 600 422 A1**
(43) Veröffentlichungstag der Anmeldung: **30.11.2005**
(21) Anmeldenummer: 04012381.2
(22) Anmeldetag: 26.05.2004
(51) Int. Cl.: C01B 3/08, C01F 7/56, B01J 7/02

(54) **Verfahren zur Herstellung von molekularem Wasserstoff und Polyaluminiumchlorid**

(71) Anmelder: Becromal S.p.A., I-20089 Quinto de' Stampi Rozzano (MI) (IT)
(72) Erfinder: Küzeci, Erkan, 27010 Ceranova (Pavia) (IT); Rosenthal, Harry P., 20080 Carpiano (MI) (IT)
(74) Vertreter: KEIL & SCHAAFHAUSEN Patentanwälte

(57) **Zusammenfassung**

Die vorliegende Erfindung betrifft ein Verfahren zur Herstellung von molekularem Wasserstoff unter gleichzeitiger Bildung von Polyaluminiumchlorid, bei dem metallisches Aluminium und/oder eine Aluminiumlegierung in eine wässrige A-luminiumchloridlösung eingebracht und unter Bildung von Polyaluminiumchlorid gelöst wird. Außerdem betrifft vorliegende Erfindung ein Verfahren zum Betreiben einer Brennstoffzelle sowie eine Vorrichtung zum Erzeugen von elektrischer Energie umfassend eine Brennstoffzelle.

## Beschreibung

Die vorliegende Erfindung betrifft ein Verfahren zur Herstellung von molekularem Wasserstoff unter gleichzeitiger Bildung von Polyaluminiumchlorid, ein Verfahren zum Betreiben einer Brennstoffzelle sowie eine Vorrichtung zum Erzeugen von elektrischer Energie umfassend eine Brennstoffzelle.

Molekularer Wasserstoff wird in einer Vielzahl von chemischen Prozessen, bspw. als Edukt, Reduktionsmittel, Hydrierungsmittel oder dergl., oder als Brennstoff, bspw. in Brennstoffzellen, eingesetzt. Bekannte Verfahren zur Herstellung von molekularem Wasserstoff lassen sich in zwei Gruppen einteilen, nämlich zum einen die chemische Umsetzung von primären wasserstoffhaltigen Energieträgern, wie Methan, Kohle, Raffinerieprodukten und dergl., in Reformierungsverfahren und zum anderen die elektrolytische Gewinnung von Wasserstoff aus Wasser. Alle zuvor genannten Verfahren sind jedoch, insbesondere was die Herstellung von hochreinem Wasserstoff anbelangt, aufwendig und kostenträchtig. Während dies bei den Verfahren gemäß der erstgenannten Gruppe u.a. darauf zurückzuführen ist, dass der gebildete Wasserstoff durch die bei der Reformierung entstehenden Nebenprodukte zwangsläufig verunreinigt ist und dieser daher in mehreren nachgeschalteten Prozessschritten aufgereinigt werden muss, liegt dies bei den Elektrolyseverfahren in den hohen Betriebskosten für die Elektrolyse und den hohen Investitionskosten der Elektrolysevorrichtungen begründet.

Aufgabe der vorliegenden Erfindung ist es daher, ein alternatives Verfahren zur Herstellung von molekularem Wasserstoff bereitzustellen, welches insbesondere die kostengünstige Herstellung von hochreinem Wasserstoff ermöglicht.

Erfindungsgemäß wird diese Aufgabe durch ein Verfahren gemäß Patentanspruch 1 gelöst.

Im Rahmen der vorliegenden Erfindung konnte gefunden werden, dass sich molekularer Wasserstoff mit einer befriedigenden Ausbeute und hoher Reinheit durch Auflösen von metallischem Aluminium und/oder einer Aluminiumlegierung in einer wässrigen Aluminiumchloridlösung herstellen lässt, wobei die Ausbeute an Wasserstoff, bezogen auf die eingesetzte Menge an Aluminium, abhängig von den Verfahrensparametern 80 bis 98 % beträgt. Aufgrund der hohen Reinheit des erzeugten molekularen Wasserstoffs kann auf eine nachfolgende kostenintensive Aufreinigung, wie sie bei den nach dem Stand der Technik bekannten Reformierungsverfahren zwingend erforderlich ist, verzichtet werden. Lediglich bei Durchführung des erfindungsgemäßen Verfahrens bei erhöhten Temperaturen ist der erzeugte Wasserstoff mit Spuren an Wasserdampf verunreinigt, der jedoch auf einfache Weise, bspw. in einer Kondensationskammer, von dem molekularem Wasserstoff abgetrennt werden kann. Der erzeugte Wasserstoff kann nachfolgend für die Energiegewinnung, bspw. in Kombination mit Brennstoffzellen, eingesetzt werden. Zudem wird bei dem erfindungsgemäßen Verfahren neben molekularem Wasserstoff eine Polyaluminiumchloridlösung erhalten, welche ausreichend rein ist, um in der Papierherstellung oder der Wasservorbereitung eingesetzt werden zu können. Bisher wurde Polyaluminiumchlorid entweder durch Druckaufschluss von Aluminiumhydroxid mittels Salzsäure in einem Autoklaven oder durch anodische Auflösung von metallischem Aluminium in Elektrolysezellen hergestellt. Beide Verfahren sind jedoch aufgrund der durch den Druckaufschluss bzw. die Elektrolyse bedingten hohen Betriebskosten kostenaufwendig. Abgesehen von einer kostengünstigen Herstellung von hochreinem molekularem Wasserstoff ermöglicht das erfindungsgemäße Verfahren daher auch eine verglichen mit den nach dem Stand der Technik bekannten Verfahren kostengünstigere Herstellung von Polyaluminiumchlorid. Ein weiterer Vorteil des erfindungsgemäßen Verfahrens liegt in dessen Flexibilität, welche darin begründet liegt, dass die erzeugte Wasserstoffmenge allein von der Menge und der Reaktivität des eingesetzten Aluminiums abhängt. Dadurch ist es möglich, die zu erzeugende Wasserstoffmenge je nach Bedarf im Bereich von wenigen Millilitern pro Stunde bis zu mehreren tausend Kubikmetern pro Stunde einzustellen.

Prinzipiell können in dem erfindungsgemäßen Verfahren sämtliche Arten an Aluminiumlegierungen und/oder Aluminium in allen Reinheitsgraden, bspw. in Form Spänen, Folien oder dergl., eingesetzt werden. Besonders gute Ergebnisse werden jedoch erhalten, wenn metallisches Aluminium mit einem Reinheitsgrad von 98 bis 99,99% und/oder eine Aluminiumlegierung mit 0,01 bis 1 g/kg Aluminium an Metallen ausgewählt aus der aus Kupfer, Eisen, Silizium, Mangan, Magnesium, Nickel, Zink und Kombinationen hiervon bestehenden Gruppe eingesetzt wird.

Gemäß einer besonderen Ausführungsform der vorliegenden Erfindung wird das metallische Aluminium und/oder die Aluminiumlegierung vor dem Einbringen in die wässrige Aluminiumchloridlösung einem chemischen und/oder elektrochemischen Ätzprozess unterworfen, um dessen Oberfläche aufzurauen. Besonders bevorzugt weist die Oberfläche des in die wässrige Aluminiumchloridlösung eingebrachten Aluminiums bzw. der Aluminiumlegierung Tunnelstrukturen mit einem Durchmesser von weniger als 2 µm und ganz besonders von bevorzugt weniger als 100 nm auf. Alternativ dazu ist es, wenn auch weniger bevorzugt, möglich, Aluminium bzw. eine Aluminiumlegierung mit glatter oder leicht aufgerauter Oberfläche einzusetzen.

Um etwaig in dem Ausgangsmaterial eingeschlossene Luft zu entfernen, wird das metallische Aluminium und/oder die Aluminiumlegierung vorzugsweise vor dem Einbringen in die wässrige Aluminiumchloridlösung mit einer Inertgasatmosphäre, bspw. Stickstoff, Argon oder dergl., gespült.

Im Rahmen der vorliegenden Erfindung hat sich gezeigt, dass besonders gute Ergebnisse im Hinblick auf Ausbeute erhalten werden, wenn die eingesetzte wässrige Aluminiumchloridlösung einen Gehalt an Aluminiumchlorid von 1 bis 400 g/l, besonders bevorzugt 20 bis 130 g/l und ganz besonders bevorzugt von 20 bis 50 g/l aufweist.

In Weiterbildung des Erfindungsgedankens wird vorgeschlagen, der wässrigen Aluminiumchloridlösung ein oder mehrere Korrosionsinhibitoren, besonders bevorzugt wenigstens einen organischen Korrosionsinhibitor ausgewählt aus der aus Carbonsäuren, Aminen, Alkoholen sowie deren Derivaten bestehenden Gruppe und/oder wenigstens einen anorganischen Korrosionsinhibitor ausgewählt aus der aus Schwefelsäure, Salpetersäure und Phosphorsäure bestehenden Gruppe, zuzusetzen.

Besonders gute Ergebnisse werden erzielt, wenn die wässrige Aluminiumchloridlösung neben einem oder mehreren Korrosionsinhibitoren auch ein oder mehrere Korrosionsaktivatoren, besonders bevorzugt wenigstens ein Metallchlorid und ganz besonders bevorzugt wenigstens ein Chlorid eines Metalls ausgewählt aus der aus Eisen, Kupfer, Nickel und Zink bestehenden Gruppe, enthält. Es ist jedoch, wenn auch weniger bevorzugt, möglich, der Aluminiumchloridlösung nur Korrosionsaktivatoren zuzufügen.

Um eine hohe Ausbeute an molekularem Wasserstoff, bezogen auf die Menge an eingesetztem Aluminium, zu erhalten, wird in Weiterbildung des Erfindungsgedankens vorgeschlagen, die wässrige Aluminiumchloridlösung während der Auflösung des metallischen Aluminiums und/oder der Aluminiumlegierung auf eine Temperatur von 10 bis 100°C, besonders bevorzugt von 50 bis 100°C und ganz besonders bevorzugt von 95 bis 100°C, einzustellen.

Zwecks Vermeidung unerwünschter Oxidationsreaktionen wird die Auflösung des metallischen Aluminiums und/oder der Aluminiumlegierung in der wässrigen Aluminiumchloridlösung vorzugsweise unter Inertgasatmosphäre und besonders bevorzugt unter Stickstoffatmosphäre durchgeführt.

In Weiterbildung des Erfindungsgedankens wird vorgeschlagen, ein Verhältnis von Aluminium (in Form von metallischem Aluminium und/oder einer Aluminiumlegierung) zu wässriger Aluminiumchloridlösung von 100 bis 5.000 m², besonders bevorzugt von 250 bis 2.000 m² und ganz besonders bevorzugt von etwa 500 m² Aluminium pro m³ Lösungsmittel einzustellen.

Insbesondere bei Durchführung des erfindungsgemäßen Verfahrens im industriellen Maßstab hat es sich eine kontinuierliche Verfahrensführung als vorteilhaft erwiesen. Diese kann bspw. in der Weise erfolgen, dass die wässrige Aluminiumchloridlösung im Kreislauf durch eine Packung aus Aluminium und/oder einer Aluminiumlegierung geführt wird und die gasförmige Reaktionsprodukte durch Einleitung von molekularem Stickstoff mit einem Überdruck aus der Reaktionskammer entfernt und Polyaluminiumchlorid kontinuierlich oder diskontinuierlich aus der Reaktionsmischung abgezogen wird.

Der erfindungsgemäß erzeugte Wasserstoff kann für alle dem Fachmann bekannten Zwecke eingesetzt werden, insbesondere für die Energiegewinnung oder als Rohstoff für chemische Reaktionen.

Ein weiterer Gegenstand der vorliegenden Erfindung ist Verfahren zum Betreiben einer eine Anode und eine Kathode umfassenden Brennstoffzelle. Erfindungsgemäß ist vorgesehen, dass mit dem zuvor beschriebenen erfindungsgemäßen Verfahren hergestellter molekularer Wasserstoff durch eine wasserstoffdurchlässige Membran als Brennstoff unmittelbar zu der Anode einer Brennstoffzelle geleitet wird, wo dieser zu Wasserstoffionen oxidiert und nach Eintreten in den Elektrolyten mit an der Kathode gebildeten zweifach negativ geladenen Sauerstoffionen zu Wasser umgesetzt wird. Vorzugsweise wird das beim Betrieb der Brennstoffzelle gebildete Wasser zu der wässrigen Aluminiumchloridlösung zurückgeführt.

Für das erfindungsgemäße Verfahren können alle dem Fachmann bekannten Brennstoffzellen eingesetzt werden, welche aus Wasserstoff und Sauerstoff unter Generierung von elektrischer Energie Wasser bilden. Üblicherweise weisen derartige Brennstoffzellen eine 50 bis 70%ige Energieausbeute auf und werden mit einer Spannung von ca. 0,7 Volt betrieben. Einzelne Brennstoffzellen sind dabei herkömmlicherweise zu Stapeln, sog. stacks, zusammengefasst, wobei die Leistung der Vorrichtung proportional zu der Anzahl der Brennstoffzellen ist.

Außerdem betrifft die vorliegende Erfindung eine Vorrichtung zum Erzeugen von elektrischer Energie, welche insbesondere zum mobilen Betrieb einer Brennstoffzelle geeignet ist. Erfindungsgemäß umfasst die Vorrichtung wenigstens eine eine Anode und eine Kathode aufweisende Brennstoffzelle, eine Kammer zur Aufnahme von metallischem Aluminium und/oder einer Aluminiumlegierung sowie einen Lösungsmittelbehälter zur Aufnahme einer wässrigen Aluminiumchloridlösung, wobei die Kammer und der Lösungsmittelbehälter über eine verschließbare Leitung miteinander verbunden sind, und, wobei die Kammer und die Brennstoffzelle über eine wasserstoffdurchlässige Membran derart verbunden sind, dass beim Betrieb der Vorrichtung molekularer Wasserstoff von der Kammer durch die Membran zur Anode der Brennstoffzelle geführt wird.

Die Erfindung wird nachfolgend anhand von Ausführungsbeispielen und der Zeichnung näher erläutert. Dabei bilden alle beschriebenen und/oder bildlich dargestellten Merkmale den Gegenstand der Erfindung, unabhängig von ihrer Zusammenfassung in den Ansprüchen oder deren Rückbeziehung.

Es zeigen:
- Fig. 1: ein Prozessdiagramm eines Verfahrens und einer Vorrichtung zur Herstellung von Wasserstoff gemäß eines Ausführungsbeispiels der vorliegenden Erfindung, und
- Fig. 2: ein Prozessdiagramm eines Verfahrens und einer Vorrichtung zum Erzeugen elektrischer Energie für einen mobilen Einsatz einer Brennstoffzelle gemäß eines Ausführungsbeispiels der vorliegenden Erfindung.

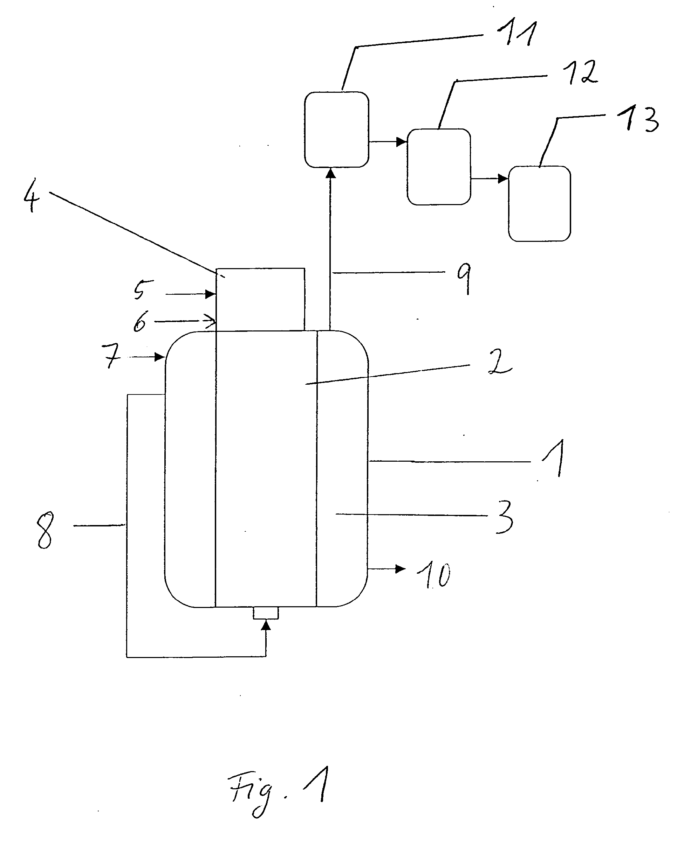

Die in der Fig. 1 dargestellte Vorrichtung umfasst einen zylinderförmigen Reaktor 1 aus Stahl mit einem Nutzvolumen von etwa 10 m³, welcher in eine Kammer 2 zur Aufnahme von Aluminium und/oder einer Aluminiumlegierung sowie eine Lösungsmittelkammer 3 unterteilt ist. Um eine Verfahrensdurchführung bei erhöhten Temperaturen, bspw. bei 100°C, auch ohne Zusatz an Korrosionsaktivatoren mit einer Außenheizung zu ermöglichen, ist der Reaktor vorzugsweise doppelwandig ausgestaltet, wobei die Reaktorinnenwand besonders bevorzugt aus hitze- und korrosionsbeständigem Material, wie bspw. Keramik, Teflon, Polypropylen oder dergl., besteht. Dem Reaktor ist eine Vorkammer 4 vorgeschaltet, welche sowohl über eine Feststoffzufuhrleitung 5 als auch eine Gaszufuhrleitung 6 für Inertgas verfügt und mit dem Reaktor verbunden ist. Zudem weist der Reaktor 1 eine Flüssigkeitszufuhrleitung 7, eine Flüssigkeitskreislaufleitung 8 sowie zwei Produktabfuhrleitungen 9, 10 für erzeugten Wasserstoff und Polyaluminiumchlorid auf, wobei die Wasserstoffabfuhrleitung 9 zu einer Kondensationskammer 11 führt, der ein Gasometer 12 und ein Energieumwandler 13 nachgeschaltet sind.

Zum Betrieb der zuvor beschriebenen Vorrichtung wird zunächst Aluminium und/oder eine Aluminiumlegierung in Form von Spänen oder Folien über die Leitung 5 in die Vorkammer 4 geleitet, dort mit Überdruck über Leitung 6 zugeführtem Inertgas, bevorzugt Stickstoff, gespült, um etwaige in dem Ausgangsmaterial eingeschlossene Luft zu entfernen, bevor das Aluminium und/oder die Aluminiumlegierung in die Reaktorkammer 2 weitergefördert wird. Über die Flüssigkeitszufuhrleitung 7 wird dem Reaktor 1 ständig frische wässrige Aluminiumchloridlösung zugeführt und mit bereits durch die Reaktorkammer 2 geführter wässriger Aluminiumchloridlösung in der Lösungsmittelkammer 3 vermischt, wonach diese Mischung über die Flüssigkeitskreislaufleitung 8 erneut der Aluminium enthaltenden Reaktorkammer 2 zugeführt wird. Die Zufuhrraten an Aluminium bzw. Aluminiumlegierung sowie an frischer wässriger Aluminiumchloridlösung und der durch die Kreislaufleitung 8 geführte Strom an Aluminiumchloridlösung werden dabei derart eingestellt, dass sich in der Reaktorkammer 2 ein konstantes Verhältnis von ca. 500 m² Aluminium pro m³ Lösungsmittel einstellt. Gebildetes Polyaluminiumchlorid, welches mittels pH- und Dichtemessungen detektiert wird, wird über die Produktabfuhrleitung 10 abgezogen, wohingegen der erzeugte molekulare Wasserstoff, welcher Spuren an Wasserdampf enthält, durch den Stickstoffstrom über die Leitung 9 der Kondensationskammer 11 zugeführt wird, in welcher Wasserdampf von dem Wasserstoff abgetrennt wird. Diese Trennung wird durch einen Feuchtigkeitsmesser je nach dem gewünschten Feuchtigkeitsgehalt des erzeugten Wasserstoffgases gesteuert. Der Wasserstoff wird dann mit Hilfe eines Gasometers zwischengespeichert, um sich dem Verbrauch des nachgeschalteten Energieumwandlers 13, bspw. einer Brennstoffzelle oder Gasturbine, anzupassen.

In dem oben beschriebenen Reaktor können ca. 500 m³ Wasserstoff pro Stunde erzeugt und mit den aktuellen Effizienzdaten mit einer Leistung von 500 kW in elektrische Energie umgewandelt werden.

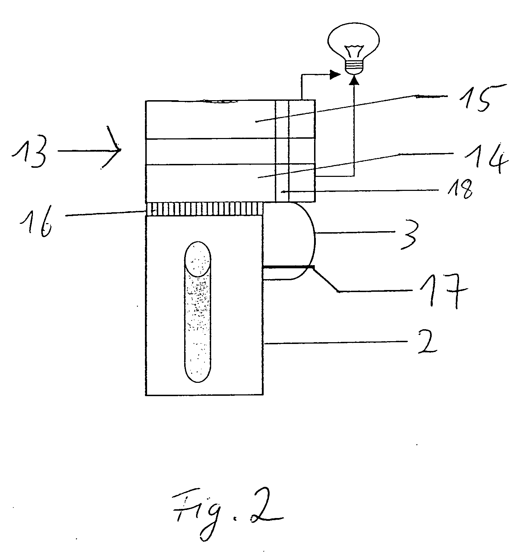

Die in der Fig. 2 dargestellte Vorrichtung umfasst neben einer Kammer für Aluminium bzw. Aluminiumlegierung 2 sowie einer Lösungsmittelkammer 3 eine herkömmliche Brennstoffzelle 13, welche eine Anode 14 sowie eine Kathode 15 umfasst. Die Brennstoffzelle 13 ist von der Kammer 2 durch eine wasserstoffdurchlässige Membran 16 derart getrennt, dass beim Betrieb der Vorrichtung molekularer Wasserstoff von der Kammer 2 durch die Membran 16 zur Anode 14 der Brennstoffzelle 13 geführt wird. Um die Wasserstoffentwicklung zum gewünschten Zeitpunkt aufnehmen oder beenden zu können, ist zwischen der Lösungsmittelkammer 3 und der Kammer 2 für Aluminium bzw. Aluminiumlegierung ein Verschlussmechanismus 17 vorgesehen, über den die Zufuhr an wässriger Aluminiumchloridlösung von der Lösungsmittelkammer 3 zu der Kammer 2 eingestellt werden kann. In der Brennstoffzelle 13 gebildetes Wasser wird über eine Leitung 18 in die Lösungsmittelkammer 3 geführt.

Mit der zuvor beschriebenen Vorrichtung können bspw. bei einem Reaktorvolumen von 50 ml und 10 g Aluminium ca. 20 Wh Energie erzeugt werden, wenn die Brennstoffzelle 13 eine 60%-ige Effizienz aufweist.

### Bezugszeichenliste:

- 1: Reaktor
- 2: (Reaktor)kammer für Aluminium
- 3: Lösungsmittelkammer
- 4: Vorkammer
- 5: Feststoffzufuhrleitung für Aluminium
- 6: Gaszufuhrleitung für Inertgas
- 7: Flüssigkeitszufuhrleitung
- 8: Flüssigkeitskreislaufleitung
- 9: Produktabfuhrleitung für Wasserstoff
- 10: Produktabfuhrleitung für Polyaluminiumchlorid
- 11: Kondensationskammer
- 12: Gasometer
- 13: Energieumwandler/Brennstoffzelle
- 14: Anode
- 15: Kathode
- 16: Membran
- 17: Verschlussmechanismus
- 18: Wasserrückführleitung

## Patentansprüche

1. Verfahren zur Herstellung von molekularem Wasserstoff, **dadurch gekennzeichnet, dass** metallisches Aluminium und/oder eine Aluminiumlegierung in eine wässrige Aluminiumchloridlösung eingebracht und unter Bildung von Polyaluminiumchlorid gelöst wird.

2. Verfahren nach Anspruch 1, **dadurch gekennzeichnet, dass** metallisches Aluminium mit einem Reinheitsgrad von 98 bis 99,99% eingesetzt wird.

3. Verfahren nach Anspruch 1 oder 2, **dadurch gekennzeichnet, dass** eine Aluminiumlegierung mit 0,01 bis 1 g/kg Aluminium an Metallen ausgewählt aus der aus Kupfer, Eisen, Silizium, Mangan, Magnesium, Nickel, Zink und Kombinationen hiervon bestehenden Gruppe eingesetzt wird.

4. Verfahren nach einem der vorhergehenden Ansprüche, **dadurch gekennzeichnet, dass** das metallische Aluminium und/oder die Aluminiumlegierung vor dem Einbringen in die wässrige Aluminiumchloridlösung einem chemischen und/oder elektrochemischen Ätzprozess unterzogen wird.

5. Verfahren nach Anspruch 4, **dadurch gekennzeichnet, dass** die Oberfläche des in die wässrige Aluminiumchloridlösung eingebrachten Aluminium und/oder der Aluminiumlegierung Tunnelstrukturen mit einem Durchmesser von weniger als 2 µm und bevorzugt weniger als 100 nm aufweist.

6. Verfahren nach einem der vorhergehenden Ansprüche, **dadurch gekennzeichnet, dass** das metallische Aluminium und/oder die Aluminiumlegierung vor dem Einbringen in die wässrige Aluminiumchloridlösung mit einer Inertgasatmosphäre zur Entfernung von in das Ausgangsmaterial eingeschlossener Luft gespült wird.

7. Verfahren nach einem der vorhergehenden Ansprüche, **dadurch gekennzeichnet, dass** eine wässrige Aluminiumchloridlösung mit einem Gehalt an Aluminiumchlorid von 1 bis 400 g/l, besonders bevorzugt 20 bis 130 g/l und ganz besonders bevorzugt von 20 bis 50 g/l eingesetzt wird.

8. Verfahren nach einem der vorhergehenden Ansprüche, **dadurch gekennzeichnet, dass** die wässrige Aluminiumchloridlösung ein oder mehrere Korrosionsinhibitoren, besonders bevorzugt wenigstens einen organischen Korrosionsinhibitor ausgewählt aus der aus Carbonsäuren, Aminen, Alkoholen sowie deren Derivaten bestehenden Gruppe und/oder wenigstens einen anorganischen Korrosionsinhibitor ausgewählt aus der aus Schwefelsäure, Salpetersäure und Phosphorsäure bestehenden Gruppe, enthält.

9. Verfahren nach einem der vorhergehenden Ansprüche, **dadurch gekennzeichnet, dass** die wässrige Aluminiumchloridlösung ein oder mehrere Korrosionsaktivatoren, besonders bevorzugt wenigstens ein Metallchlorid und ganz besonders bevorzugt wenigstens ein Chlorid eines Metalls ausgewählt aus der aus Eisen, Kupfer, Nickel und Zink bestehenden Gruppe, enthält.

10. Verfahren nach einem der vorhergehenden Ansprüche, **dadurch gekennzeichnet, dass** die wässrige Aluminiumchloridlösung während der Auflösung des metallischen Aluminiums und/oder der Aluminiumlegierung eine Temperatur von 10 bis 100°C, besonders bevorzugt von 50 bis 100°C und ganz besonders bevorzugt von 95 bis 100°C, aufweist.

11. Verfahren nach einem der vorhergehenden Ansprüche, **dadurch gekennzeichnet, dass** die Auflösung des metallischen Aluminiums und/oder der Aluminiumlegierung in der wässrigen Aluminiumchloridlösung unter Inertgasatmosphäre und besonders bevorzugt unter Stickstoffatmosphäre durchgeführt wird.

12. Verfahren nach einem der vorhergehenden Ansprüche, **dadurch gekennzeichnet, dass** ein Verhältnis von Aluminium als Feststoff zu wässriger Aluminiumchloridlösung von 100 bis 5.000 m², besonders bevorzugt von 250 bis 2.000 m² und ganz besonders bevorzugt von etwa 500 m² Aluminium pro m³ Lösungsmittel eingestellt wird.

13. Verfahren nach einem der vorhergehenden Ansprüche, **dadurch gekennzeichnet, dass** dieses kontinuierlich durchgeführt wird, indem die wässrige Aluminiumchloridlösung im Kreislauf durch eine Packung aus Aluminium und/oder einer Aluminiumlegierung geführt, gasförmige Reaktionsprodukte durch Einleitung von molekularem Stickstoff mit einem Überdruck aus der Reaktionskammer entfernt und Polyaluminiumchlorid kontinuierlich oder diskontinuierlich aus der Reaktionsmischung abgezogen wird.

14. Verfahren zum Betreiben einer Brennstoffzelle mit einer Anode und einer Kathode, **dadurch gekennzeichnet, dass** molekularer Wasserstoff gemäß einem der Ansprüche 1 bis 13 hergestellt und dieser durch eine wasserstoffdurchlässige Membran (16) unmittelbar zu der Anode (14) einer Brennstoffzelle (13) geleitet wird.

15. Verfahren nach Anspruch 14, **dadurch gekennzeichnet, dass** das beim Betrieb der Brennstoffzelle (13) gebildete Wasser zu der wässrigen Aluminiumchloridlösung geführt wird.

16. Vorrichtung zum Erzeugen von elektrischer Energie umfassend wenigstens eine eine Anode (14) und eine Kathode (15) aufweisende Brennstoffzelle (13), eine Kammer (2) zur Aufnahme von metallischem Aluminium und/oder einer Aluminiumlegierung sowie einen Lösungsmittelbehälter (3) zur Aufnahme einer wässrigen Aluminiumchloridlösung, wobei die Kammer (2) und der Lösungsmittelbehälter (3) über eine verschließbare Leitung miteinander verbunden sind, und, wobei die Kammer (2) und die Brennstoffzelle (13) über eine wasserstoffdurchlässige Membran (16) derart verbunden sind, dass beim Betrieb der Vorrichtung molekularer Wasserstoff von der Kammer (2) durch die Membran (16) zur Anode (14) der Brennstoffzelle (13) geführt wird.
